**Europäisches Patentamt**

**European Patent Office**

**Office européen des brevets**

(11) Veröffentlichungsnummer: **0 119 600**
A2

# (12) EUROPÄISCHE PATENTANMELDUNG

(21) Anmeldenummer: **84102867.3**

(22) Anmeldetag: **15.03.84**

(51) Int. Cl.³: **H 04 L 25/20**

(30) Priorität: **24.03.83 DE 3310773**

(43) Veröffentlichungstag der Anmeldung: **26.09.84**
**Patentblatt 84/39**

(84) Benannte Vertragsstaaten: **AT BE CH DE FR GB IT LI NL**

(71) Anmelder: **Siemens Aktiengesellschaft, Berlin und München Wittelsbacherplatz 2, D-8000 München 2 (DE)**

(72) Erfinder: **Barabas, Udo, Dr.-Ing., Gärtnerstrasse 36 b, D-8208 Kolbermoor (DE)**

(54) **Regenerierung digitaler Signale hoher Schrittgeschwindigkeit.**

(57) Bei der zeitlichen Regenerierung digitaler Signale mit Schrittgeschwindigkeiten von über 500 Mbit/s können Schwierigkeiten hinsichtlich der Grenzfrequenzen der benötigten D-Flipflops auftreten. Entsprechend der Erfindung wird ein Verfahren einer Anordnung zur Regenerierung digitaler Signale angegeben, bei der auf die Verwendung rückgekoppelter Schaltungen wie z.B. Flipflops verzichtet werden kann. Die zeitliche Regenerierung digitaler Signale erfolgt dadurch, daß die Einsbits und die Nullbits getrennt mit Takthalbwellen logisch verknüpft werden und das Verknüpfungsergebnis summiert wird. Die Erfindung ist insbesondere für Zwischenregeneratoren von digitalen Übertragungsstrecken vorteilhaft einsetzbar.

SIEMENS AKTIENGESELLSCHAFT

Berlin und München                          VPA 83 P 1195 E

Regenerierung digitaler Signale hoher Schrittgeschwindigkeit

Die Erfindung bezieht sich auf ein Verfahren zur Regenerierung digitaler Signale hoher Schrittgeschwindigkeit, bei dem die digitalen Signale in unipolarer Form
zunächst amplituden- und anschließend zeitmäßig regeneriert werden und auf einen Regenerator zur Durchführung des Verfahrens.

Ein Verfahren und ein Regenerator der eingangs erwähnten
Art ist aus telcom report 2, 1979, Beiheft "Digitale Übertragungstechnik", Seiten 105 bis 109 bekannt. Dort ist
im Bild 1 und der zugehörigen Beschreibung das Blockschaltbild eines Zwischenregenerators für digitale
Signale mit einer Bitrate von 565 Mbit/s dargestellt.
Im Anschluß an einen eingangsseitigen Entzerrerverstärker
und einen Breitbandverstärker enthält der bekannte
Zwischenregenerator einen Schmitt-Trigger zur Amplitudenentscheidung und ein getaktetes D-Flipflop zur Zeitentscheidung. An den Ausgängen des D-Flipflops stehen dabei
die logischen Zustände der Abtastwerte bis zum Eintreffen
des nächsten Taktimpulses an, so daß von einem derartigen
Regenerator digitale Signale im NRZ-Format erzeugt werden.
Das verwendete D-Flipflop enthält die Speichereigenschaft
durch eine Rückkopplung im Flipflop selbst, durch diese
Rückkopplung wird gleichzeitig in hohem Maße die maximale Signalverarbeitungsgeschwindigkeit des Flipflops
und damit die maximale Bitrage der zu regenerierenden
digitalen Signale bestimmt. In der Praxis ergeben sich
Schwierigkeiten bei der Verarbeitung von digitalen Signalen
mit Bitraten über 500 Mbit/s mittels Flipflop, die beispielsweise durch Selektieren der verwendeten Flipflops
nur teilweise behebbar sind.

Ah 1 Seu/22.3.83

Die Aufgabe der Erfindung besteht also darin, eine Möglichkeit zur Regenerierung digitaler Signale hoher Schrittgeschwindigkeit zu finden, die keine Schaltung mit Rückkopplung wie z.B. D-Flipflop zur zeitmäßigen Regenerierung benötigt.

Erfindungsgemäß wird die Aufgabe dadurch gelöst, daß örtlich erzeugte Taktimpulse in einer den digitalen Signalen entsprechenden Weise amplitudenmäßig regeneriert werden, daß die Einsbits und die Nullbits der digitalen Signale jeweils getrennt mit einer Takthalbwelle logisch verknüpft werden und daß die sich aus der Verknüpfung ergebenden Signale summiert werden.

Bei dem erfindungsgemäßen Verfahren sind in vorteilhafter Weise die maximalen    verarbeitbaren Bitraten nur noch von den Eigenanstiegszeiten der verwendeten Bauelemente, also der Transistoren, begrenzt und können deshalb Werte von 1Bit/s überschreiten.

Vorteilhafte Weiterbildungen des erfindungsgemäßen Verfahrens sind in den Patentansprüchen 2 und 3 beschrieben, ein Regenerator zur Durchführung des erfindungsgemäßen Verfahrens ist im Patentanspruch 4 enthalten.

Die Erfindung soll im folgenden anhand von in der Zeichnung dargestellten Ausführungsbeispielen näher erläutert werden.

Dabei zeigt

Fig. 1 das Prinzipschaltbild des für die Erfindung wesentlichen Teils eines Regenerators für digitale Signale,

Fig. 2 ein Impulsdiagramm zur Schaltung nach Fig. 1 und

Fig. 3 ein detaillierteres Schaltbild eines Ausführungsbeispiels des Regenerators nach Fig. 1.

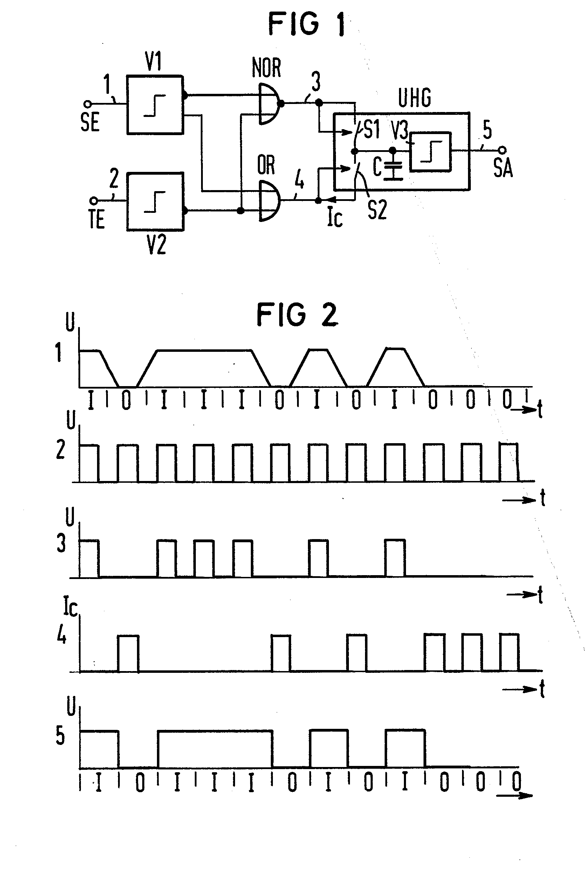

In der Fig. 1 ist mit SE der Signaleingang für die digitalen Signale bezeichnet, die an dieser Stelle im Regenerator in bereits entzerrter und verstärkter Form vorliegen und als Beispiel in der Zeile 1 dargestellt sind. Mit dem Signaleingang SE ist der Eingang eines ersten Verstärkers V1 verbunden, der die digitalen Signale verstärkt und amplitudenbegrenzt. Der Takteingang TE des Regenerators dient zur Aufnahme der in Fig. 2, Zeile 2 in idealisierter Form dargestellten Taktsignale, die beispielsweise mittels einer Phasenregelschleife aus den empfangenen digitalen Signalen abgeleitet wurden. Diese Taktsignale werden in einem zweiten Verstärker V2 ebenfalls verstärkt und amplitudenbegrenzt und stehen an dessen invertierendem Ausgang zur Verfügung. Mit einem invertierenden Ausgang des ersten Verstärkers V1 ist der erste Eingang eines NOR-Gatters verbunden, während mit einem nichtinvertierenden Ausgang des Verstärkers der erste Eingang eines ODER-Gatters OR verbunden ist. Mit dem invertierenden Ausgang des zweiten Verstärkers sind die zweiten Eingänge des NOR-Gatters und des ODER-Gatters verbunden. Die Ausgänge des NOR-Gatters und des ODER-Gatters sind mit einem ersten und einem zweiten Eingang eines Umschalt- und Haltegliedes UHG verbunden, das eine Haltekapazität C enthält, deren einer Anschluß mit Bezugspotential und deren anderer Anschluß mit den Signalausgängen zweier Schalter S1, S2 und mit dem Signaleingang eines dritten Verstärkers V3 verbunden ist. Der Signaleingang des ersten Schalters S1 ist mit dem ersten Signaleingang des Umschalt- und Haltegliedes UHG verbunden, während an dessen zweitem Signaleingang der Signaleingang des zweiten Schalters S2 angeschlossen ist. Die Schalter werden dabei durch das Potential am jeweiligen Signaleingang gesteuert, der Schalter S1 schließt, wenn am betreffenden Signaleingang der logische Einspegel ansteht, während der Schalter S2 entsprechend beim logischen Nullpegel schließt. Bei dem dritten Verstärker V3 handelt es sich ebenfalls um einen amplitudenbegrenzten Verstärker, der eine gewisse Amplitudenregeneration bewirkt.

Zur Erläuterung der Funktion der Schaltung nach Fig. 1 wird das Impulsdiagramm nach Fig. 2 herangezogen, in dem die mit 1 bis 5 bezeichneten Signale der Fig. 1 dargestellt sind. Der erste und der zweite begrenzende Verstärker V1, V2 bewirken eine gewisse Amplitudenregeneration der digitalen Signale nach Zeile 1 und der Taktsignale nach Zeile 2 und außerdem die Erzeugung der jeweils inversen Signale. Im anschließenden NOR-Gatter bzw. ODER-Gatter werden jeweils die negativen Takthalbwellen mit den logischen Eins-Bits bzw. den Null-Bits verknüpft, sodaß die Signale nach Fig. 2, Zeilen 3 und 4, entstehen. Es handelt sich also um eine Verknüpfung in negativer Logik, so daß aus den ODER-Funktionen UND-Funktionen werden. Wegen der Verknüpfung jeweils mit einer Halbwelle des Taktes ergibt sich das Ausgangssignal im RZ-Format (Return to Zero) und außerdem nach Einsbits (3) und Nullbits (4) getrennt. Die Summierung beider Signalzüge und eine RZ-NRZ-Formung erfolgt im angeschlossenen Umschalt- und Halteglied UHG. Die Schalter S1 und S2 sind jeweils geschlossen, wenn ein logischer Impuls am zugehörigen Signaleingang anliegt, dabei wird durch die vom Ausgang des NOR-Gatters abgegebenen logischen Eins-Impulse über den geschlossenen ersten Schalter S1 die Spannung an der Haltekapazität C auf den logischen Einspegel angehoben und entsprechend durch die vom Ausgang des ODER-Gatters stammenden logischen Nullimpulse bei geschlossenem Schalter S2 auf den logischen Nullpegel abgesenkt.
Treffen mehrere Einsbits oder Nullbits hintereinander ein, dann wird der logische Pegel an der Haltekapazität entsprechend lang festgehalten, wobei die Information der Signalbits in jeder Taktzeit nachgeschrieben wird.

Am Eingang des dritten Verstärkers V3 stehen damit bereits vollbitbreite Impulse im NRZ-Format, Der dritte Verstärker V3 wirkt als Schwellwertentscheider, der eine konstante und von den während der Umladung von C erzeugten Störungen bereinigte Amplitude der abgegebenen Impulse erzeugt.

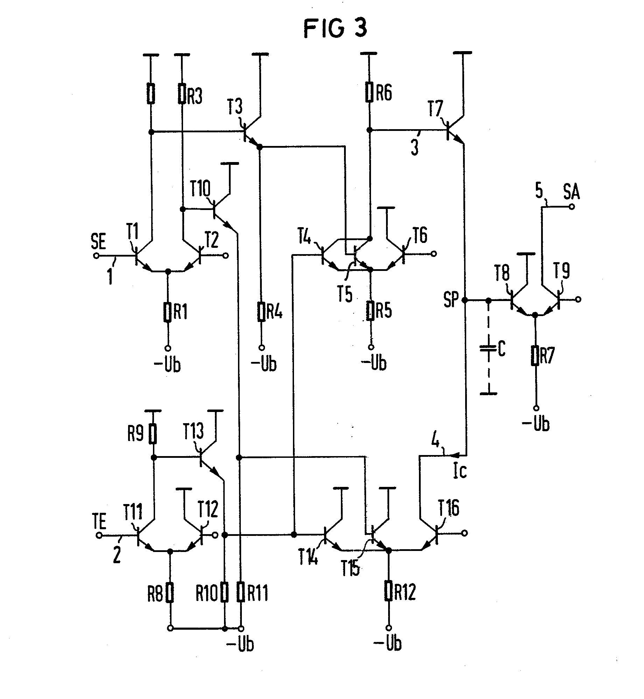

In der Fig. 3 ist eine Ausführungsform des Regenerators nach Fig. 1 detaillierter dargestellt, wobei jedoch für das Verständnis der Schaltung unwesentliche Details wie beispielsweise Basisspannungsteiler weggelassen wurden. Mit dem Signaleingang SE ist der Basisanschluß eines ersten Transistors T1 verbunden, dessen Emitteranschluß mit dem Emitteranschluß eines zweiten Transistors T2 und außerdem über einen ersten Widerstand R1 mit der Betriebsspannung -Ub verbunden ist. Die beiden Transistoren T1 und T2 bilden also einen emittergekoppelten und übersteuerten Differenzverstärker, der dem Verstärker V1 entspricht. Der Kollektoranschluß des ersten Transistors T1 ist mit dem Basisanschluß eines dritten Transistors T3 und über einen zweiten Widerstand R2 mit Bezugspotential verbunden. Entsprechend ist der Kollektoranschluß des zweiten Transistors T2 über einen dritten Widerstand mit Bezugspotential verbunden, während der Basisanschluß dieses Transistors mit einer Referenzspannungsquelle verbunden ist. Der dritte Transistor T3 ist als Emitterfolger geschaltet, der Kollektoranschluß dieses Transistors ist mit Bezugspotential verbunden, während der Emitteranschluß dieses Transistors über einen vierten Widerstand R4 mit Betriebsspannung -Ub und außerdem direkt mit dem Basisanschluß eines fünften Transistors T5 verbunden ist. Dieser Transistor bildet mit einem vierten Transistor T4 und einem sechsten Transistor T6 das NOR-Gatter nach Fig. 1. Der Basisanschluß des fünften Transistors T5 bildet dabei den ersten und der Basisanschluß des vierten Transistors T4 den zweiten Signaleingang des NOR-Gatters, während der Basisanschluß des sechsten Transistors T6 mit einer Referenzspannungsquelle verbunden ist. Die Emitteranschlüsse dieser Transistoren sind miteinander und über einen fünften Widerstand R5 mit Betriebsspannung -Ub verbunden. Der Kollektoranschluß des sechsten Transistors T6 ist mit Bezugspotential verbunden, während die Kollektoranschlüsse des vierten und des fünften Transistors T4, T5 miteinander, mit dem Basisanschluß eines siebten Transistors T7 und über einen sechsten Widerstand R6 mit Bezugspotential verbunden sind. Der Kollektoranschluß des siebten Transistors T7 ist mit Bezugspotential verbunden, während der Emitteranschluß dieses Transistors an den Summationspunkt SP angeschlossen ist, an den der aus dem achten und dem neunten Transistor T8, T9 gebildete dritte Verstärker V3 angeschlossen ist. Die Emitteranschlüsse beider Transistoren sind miteinander und über einen siebten Widerstand mit der Betriebsspannung -Ub verbunden, der Kollektoranschluß des achten Transistors T8 ist an Bezugspotential angeschlossen, während der Kollektoranschluß des neunten Transistors T9 mit dem Signalausgang SA des Umschalt- und Haltegliedes UHG und des Regenerators verbunden ist. Der Basisanschluß des neunten Transistors T9 ist mit einer Bezugsspannungsquelle verbunden, die Haltekapazität C ist nicht als getrenntes Bauteil an den Basisanschluß des achten Transistors T8 angeschlossen, sie ergibt sich beim logischen Einspegel durch die Diffusionskapazität des nachfolgenden Transistors T8 und beim Nullpegel durch die Sperrschicht- und Schaltkapazität dieses Transistors.

Mit dem Takteingang TE ist der Basisanschluß eines elften Transistors T11 verbunden, dessen Kollektoranschluß mit dem Basisanschluß eines dreizehnten Transistors T13 und über einen neunten Widerstand R9 mit Bezugspotential verbunden ist. Der Emitteranschluß des Transistors T11 ist mit dem Emitteranschluß eines zwölften Transistors T12 und über einen achten Widerstand R8 mit Betriebsspannung -Ub verbunden ist. Der Basisanschluß des zwölften Transistors T12 ist mit einer Referenzspannungsquelle verbunden, während der Kollektoranschluß dieses Transistors mit Bezugspotential verbunden ist. Der emittergekoppelte Differenzverstärker mit den beiden Transistoren T11, T12 bildet
also den zweiten Verstärker V2 der Schaltungsanordnung
nach der Fig. 1.

Der Kollektoranschluß des dreizehnten Transistors T13
ist mit Bezugspotential verbunden, während der Emitteranschluß dieses Transistors über einen zehnten Widerstand R10 mit Betriebsspannung -Ub und außerdem direkt
mit den Basisanschlüssen des vierten Transistors T4
und eines vierzehnten Transistors T14 verbunden ist.
Der Kollektoranschluß des zweiten Transistors T2 ist mit
dem Basisanschluß eines zehnten Transistors T10 verbunden, der als Emitterfolger geschaltet ist, und dessen
Kollektoranschluß mit Bezugspotential verbunden ist,
während dessen Emitteranschluß mit dem Basisanschluß
eines fünfzehnten Transistors T15 und über einen elften
Widerstand R11 mit Betriebsspannung -Ub verbunden ist.
Der vierzehnte und der fünfzehnte Transistors T14, T15
bilden mit dem sechzehnten Transistor T16 das ODER-Gatter OR nach Fig. 1. Die Emitteranschlüsse dieser Transisotren sind miteinander und über einen zwölften Widerstand R12 mit Betriebsspannung -Ub verbunden. Die
Kollektoranschlüsse des vierzehnten und des fünfzehnten
Transistors T14, T15 sind mit Bezugspotential verbunden, der Kollektoranschluß des sechzehnten Anschluß T16
ist mit dem Summationspunkt SP und damit mit der Haltekapazität C verbunden, der Basisanschluß dieses Transistors T16 ist an eine Referenzspannungsquelle angeschlossen.

Die Ausführung der amplitudenbegrenzenden Verstärker und
der Gatter erfolgt in Stromschaltertechnik, so daß eine
hohe Umschaltgeschwindigkeit sichergestellt ist. Der
Transistors T7 ersetzt den Schalter S1 des Umschalt- und
Haltegliedes UHG. Der Transistor T16 stellt gleichzeitig
den Schalter S2 vom UHG dar. Die positiven Impulse der
Einsbits vom Emitterfolger T7 werden über den Summationspunkt SP auf die Haltekapazität C gegeben, wobei während jedes Impulses der Emitterfolger leitet und das Potential der Haltekapazität auf den logischen Einspegel hochgezogen wird. Nach Passieren des Impulses sperrt der Transistor T7, sodaß entsprechend einer Entladekurve das logische Einspotential an der Haltekapazität für wenigstens eine Bitdauer erhalten bleibt. Jeder Nullimpuls vom ODER-Gatter OR bzw. vom Transistor T16 führt dazu, daß durch diesen der angedeutete Kollektorstrom Ic fließt, der das Potential an der Haltekapazität C auf das Nullpotential absenkt. Bei einem Signalhub am Punkt 3, also am Basisanschluß des Transistors T7, von etwa 0,8 Volt schwankt das Potential an der Haltekapazität zwischen dem logischen Einspegel von etwa -0,8 Volt und dem logischen Nullpegel von etwa -1,6 Volt, so daß für die ECL-Logik übliche Verhältnisse vorliegen. Tiefer als -1,6V kann das Potential an der Haltekapazität nicht sinken, weil dann der Transitor T7 wieder leitend wird und das Potential an Haltekapazität C festhält. Der Strom $I_C$ wird dann von T7 übernommen.

4 Patentansprüche

3 Figuren

Patentansprüche

1. Verfahren zur Regenerierung digitaler Signale hoher Schrittgeschwindigkeit, bei dem die digitalen Signale in unipolarer Form zunächst amplituden- und anschließend zeitmäßig regeneriert werden, d a d u r c h   g e k e n n - z e i c h n e t ,  daß örtlich erzeugte Taktimpulse in einer den digitalen Signalen entsprechenden Weise amplitudenmäßig regeneriert werden, daß die Einsbits und die Nullbits der digitalen Signale jeweils getrennt mit einer Takthalbwelle logisch verknüpft werden und daß die sich aus der Verknüpfung ergebenden Signale summiert werden.

2. Verfahren nach Patentanspruch 1, d a d u r c h   g e - k e n n z e i c h n e t , daß die Einsbits des digitalen Signals in inverser Form mit den negativen Halbwellen des Taktsignals nach Art einer NOR-Funktion logisch verknüpft werden und daß die Nullbits des digitalen Signals mit den negativen Halbwellen des Taktsignals nach Art einer ODER-Funktion logisch verknüpft werden.

3. Verfahren nach Ansprüchen 1 oder 2, d a d u r c h   g e k e n n z e i c h n e t , daß die sich aus der Verknüpfung ergebenden Signale nach der Summierung einer RZ-NRZ-Formung unterworfen werden.

4. Regenerator zur Durchführung der Verfahren nach Ansprüchen 1 bis 3 mit wenigstens einem ersten, mit dem Signaleingang für die digitalen Signale verbundenen Amplitudenregenerator und wenigstens einem nachgeschal- teten getakteten Zeitregenerator, d a d u r c h   g e - k e n n z e i c h n e t , daß mit einem Takteingang (TE) ein zweiter Amplitudenregenerator (V2) verbunden ist, daß der erste Amplitudenregenerator (V1) einen invertierenden und einen nichtinvertierenden Ausgang und der

0119600

zweite Amplitudenregenerator (V2) wenigstens einen invertierenden Ausgang aufweist, daß mit dem invertierenden Ausgang des ersten Amplitudenregenerators (V1) der eine Eingang eines NOR-Gatters (NOR) und mit dem nichtinvertierenden Ausgang des ersten Amplitudenregenerators (V1) der eine Eingang eines ODER-Gatters (OR) verbunden ist, daß mit dem invertierenden Ausgang des zweiten Amplitudenregenerators (AV2) die zweiten Eingänge des NOR-Gatters (NOR) und des ODER-Gatters (OR) verbunden sind, daß mit dem Ausgang des NOR-Gatters der erste Eingang und mit dem Ausgang des ODER-Gatters der zweite Eingang eines Umschalt- und Haltegliedes (UHG) verbunden ist, daß dieses Umschalt- und Halteglied eine Haltekapazität (C) enthält, deren einer Anschluß auf Bezugspotential liegt und deren anderer Anschluß über einen Schwellwertverstärker (V3) mit dem Signalwertausgang (SA) des Umschalt- und Haltegliedes und außerdem mit den Signalausgängen zweier Schalter verbunden ist, daß der Signaleingang des ersten Schalters (S1) mit dem ersten Signaleingang des Umschalt- und Haltegliedes (UHG) und der Signaleingang des zweiten Schalters (S2) mit dem zweiten Signaleingang des Umschalt- und Haltegliedes (UHG) verbunden ist und daß die Schalter bei Auftreten von Signalimpulsen am jeweiligen Signaleingang geschlossen sind.

0119600

1/2

FIG 1

FIG 2

## FIG 3